# EUROPÄISCHE PATENTSCHRIFT

(11) **EP 2 284 431 B1**
(45) Veröffentlichungstag und Bekanntmachung des Hinweises auf die Patenterteilung: **04.03.2015**
(21) Anmeldenummer: 09450142.6
(22) Anmeldetag: 05.08.2009
(51) Int. Cl.: F16L 47/24, B29C 45/16

(54) **Armatur, insbesondere ein Verbindungs- bzw. Anschlussstück**
Fitting, especially a connection or attachment piece
Armature, notamment pièce de liaison ou de raccordement

(43) Veröffentlichungstag der Anmeldung: 16.02.2011
(73) Patentinhaber: KE KELIT Kunststoffwerk GmbH, 4020 Linz (AT)
(72) Erfinder: Ratschmann, Elmar, Dipl.-Ing., 4020 Linz (AT)
(74) Vertreter: Patentanwaltskanzlei Hübscher

(56) Entgegenhaltungen:
- EP-A- 0 688 994
- EP-A- 2 039 491
- WO-A-2005/052428
- DE-C1- 4 129 853
- DE-C1- 19 510 714
- US-A- 5 749 995

## Beschreibung

Die Erfindung betrifft eine Armatur, insbesondere Verbindungs- bzw. Anschlussstück, mit wenigstens einem mit einem Kunststoffmantel umspritzten, einen Anschluss ausbildenden Einlegeteil, wobei Kunststoffmantel und Einlegeteil aus miteinander unverschweißbaren Kunststoffen bestehen.

Im Rohrleitungsbau kommt es vor, dass Rohre und Verbindungs- bzw. Anschlussstücke zusammenstoßen bzw. zusammengefügt werden müssen, die aus verschiedenen Kunststoffen und gegebenenfalls Metallen bestehen, wobei die Materialien des einen Bauteiles mit denen des anderen Bauteiles weder verklebbar noch verschweißbar sind. Es gibt eine Vielzahl an Kunststoffen, die weder durch Schweißen noch durch Kleben untereinander verbunden werden können. Insbesondere beim Umspritzen von höherfesten Einlegeteilen aus Kunststoff (z.B. Gewindeeinsätzen) zur Herstellung von Verbindungs- bzw. Anschlussstücken kommt es in der Regel aufgrund der Verwendung artfremder Polymere zu keiner chemischen Bindung bzw. Haftung zwischen dem Material des Einlegeteiles und dem Kunststoffmantel. Zur Verbindung miteinander nicht verklebbarer oder verschweißbarer Kunststoffrohre wurde bereits die Verwendung eines mit Außenringrillen versehenen Verbindungsstückes vorgeschlagen (AT 405 872 B). Das Verbindungsstück besteht dabei aus Metall oder hochfestem Kunststoff, wobei das Verbindungsstück unter Ausfüllung der Rillen einerends mit Material des einen und anderends mit Material des anderen Kunststoffs umfasst ist. Dies hat aber unter anderem infolge von unterschiedlichen Schwindungsverhalten der einzelnen Kunststoffe Undichtheiten zwischen den Einlegeteilen und dem umhüllenden Kunststoffmantel zur Folge.

Es ist bereits ein Verbindungsstück zum Anschluss einer metallischen Armatur an ein Kunststoffleitungsrohr bekannt (EP 611 276 A1), das aus zwei Kunststoffelementen verschiedener Härte besteht, einem Einlegeteil zum Anschluss an die Armatur und einem Kunststoffmantel, wobei der Kunststoffmantel aus einem weniger festen Werkstoff hergestellt ist und eine Muffe zur Schweißverbindung mit einem Leitungsrohr bildet. Von Nachteil ist hierbei wiederum die mangelnde Dichtheit zwischen dem Einlegeteil und dem ihn umhüllenden Kunststoffmantel aufgrund der unterschiedlichen Schwindungsverhalten und der Unverbindbarkeit der Kunststoffe. Ein Verbindungs- bzw. Anschlussstück, mit einem von einem Kunststoffmantel umschlossenen Einlegeteil in Form eines Rohres, wobei Kunststoffmantel und Einlegeteil aus miteinander unverschweißbaren Kunststoffen bestehen ist aus der US 5 749 995 A bekannt. Zur Schaffung einer dichten Verbindung ist zwischen Einlegeteil und Kunststoffmantel ein Dichtelement angeordnet, das gegebenenfalls sowohl mit dem Einlegeteil als auch mit dem Kunststoffmantel verklebt ist.

Aus der US 5 366 257 A ist ein Anschlussstück aus wenigstens einem metallischen, mit einem Kunststoffmantel umspritzen und einen Anschluss ausbildenden Einlegeteil bekannt, wobei der Kunststoffmantel und das metallische Einlegeteil naturgemäß miteinander keine Verbindung eingehen, weshalb zwischen metallischem Einlegeteil und Kunststoffmantel eine Dichtung in Form eines O-Ringes vorgesehen ist. Aus der EP 1 369 635 A1 ist ebenfalls ein Anschlussstück bekannt, wobei dort sowohl Einlegeteil als auch Kunststoffmantel aus vorzugsweise miteinander verschweißbaren Kunststoffen bestehen. Um für den Kunststoffeinsatz eine höhere Festigkeit erreichen zu können, wurde gemäß dieser Druckschrift vorgeschlagen zwischen Formkörper und Kunststoffeinsatz einen gegenüber dem Strömungsmedium eingeschlossenen metallischen Stützring vorzusehen. Damit wird allerdings keine ausreichend hohe Verstärkung des Kunststoffeinsatzes erzielt. Ein Gewindeeinsatz für ein Verbindungs- bzw. Anschlussstück ist beispielsweise aus der EP 0 688 994 A1 bekannt. Der Gewindeeinsatz ist im Verbindungs- bzw. Anschlussstück frei drehbar gelagert und nur axial gesichert. Zur Abdichtung ist zwischen dem Verbindungs- bzw. Anschlussstück und dem Gewindeeinsatz ein Dichtelement angeordnet.

Der Erfindung liegt dagegen die Aufgabe zugrunde, verhältnismäßig einfach herstellbare Armaturen, insbesondere Verbindungs- bzw. Anschlussstücke, aus nicht miteinander verschweißbaren oder verklebbaren Kunststoffkomponenten zu schaffen, die mit einfachen Mitteln eine dichte Verbindung zwischen den Kunststoffkomponenten erlaubt.

Die Erfindung löst diese Aufgabe dadurch, dass zwischen Einlegeteil und Kunststoffmantel wenigstens ein Dichtelement aus einem thermoplastischen Elastomer, vorzugsweise ein Dichtring, angeordnet ist, der sowohl mit dem Einlegeteil als auch mit dem Kunststoffmantel stoffschlüssig verschmolzen ist.

Gemäß der Erfindung ist für das Dichtelement ein Werkstoff zu wählen, der sich insbesondere bei der Fertigung, mit den Kunststoffen von Einlegeteil und Kunststoffmantel stoffschlüssig verbindet und somit in besonders einfacher Weise für eine dichte Verbindung zwischen den Kunststoffkomponenten sorgt. Auch unterschiedliche Schwindungsverhalten der einzelnen Kunststoffe können somit keine Undichtheiten zwischen den Einlegeteilen und dem ihn umhüllenden Kunststoffmantel nach sich ziehen, da durch den Stoffschluss sowohl zwischen Dichtelement und Einlegeteil als auch zwischen Dichtelement und Kunststoffmantel eine Fluid- und Gasdichte Verbindung zwischen den Kunststoffkomponenten gegeben ist. Natürlich kann auch die gesamte Kontaktfläche zwischen Einlegeteil und Kunststoffmantel mit dem Dichtelement überzogen sein, wenn dies erforderlich ist.

Aus fertigungstechnischen Gründen, und um stets definierte Verhältnisse für das Dichtelement gewährleisten zu können, empfiehlt es sich, wenn das Dichtelement in wenigstens eine Außenringrille des Einlegeteils eingesetzt und über die Nutflanken mit dem Einlegeteil stoffschlüssig verbunden ist. Natürlich können auch, je nach Erfordernis, entsprechend mehr Außenringrillen mit Dichtelementen vorgesehen sein. Die Außenringrillen dienen zudem dazu eventuell zwischen Einlegeteil und Kunststoffmantel auftretende Axialkräfte sicher abzutragen. Sollen zudem Drehkräfte, wie sie unter anderem bei der Montage auftreten können, ebenso vorteilhaft abgetragen werden, empfiehlt es sich, wenn das Einlegeteil im Kunststoffmantel mittels einer Verzahnung gegen eine Relativverdrehung gesichert ist.

Für die Erfindung gut geeignete Kunststoffe für das Dichtelement kommen aus der Gruppe der thermoplastischen Elastomere, die sich nicht nur mit den üblicherweise für das Einlegeteil und für den Kunststoffmantel verwendeten Kunststoffen stoffschlüssig verbinden lassen, sondern auch noch problemlos verarbeitbar sind.

Ein erfindungsgemäßes Verfahren zum Herstellen einer derartigen Armatur zeichnet sich beispielsweise dadurch aus, dass zuerst das Einlegeteil auf einer Spritzgussmaschine gefertigt und dann in einem weiteren Arbeitsschritt vor einem Auskühlen des Dichtelementes auf derselben Spritzgussmaschine das Dichtelement auf das Einlegeteil unter stoffschlüssiger Verbindung durch Verschmelzen mit dem Einlegeteil aufgespritzt wird. Anschließend wird der Kunststoffmantel in einem weiteren Arbeitsschritt, gegebenenfalls nach einem vortemperieren von Einlegeteil und Dichtelement, auf Einlegeteil und Dichtelement unter stoffschlüssiger Verbindung durch Verschmelzen mit dem Dichtelement aufgebracht. Durch die entsprechende Temperierung der einzelnen Werkstoffe wird gewährleistet, dass zwischen Einlegeteil und Dichtelement durch verschmelzen eine stoffschlüssige Verbindung entsteht.

Des Weiteren umfasst die Erfindung ein Zwischenprodukt für eine Armatur, umfassend einen einen Anschluss ausbildenden Einlegeteil, der an einer Anschlußfläche für einen Kunststoffmantel der Armatur ein Dichtelement, vorzugsweise einen Dichtring, aufweist, der sowohl mit dem Einlegeteil als auch mit dem Kunststoffmantel stoffschlüssig verbunden ist. Derartige Zwischenprodukte können beispielsweise auf Vorrat produziert und verhältnismäßig platzsparend zwischengelagert werden. Erst bei Bedarf werden aus diesen Zwischenprodukten die erforderlichen Anzahlen an Armaturen, insbesondere an Verbindungs- bzw. Anschlussstücken, gefertigt.

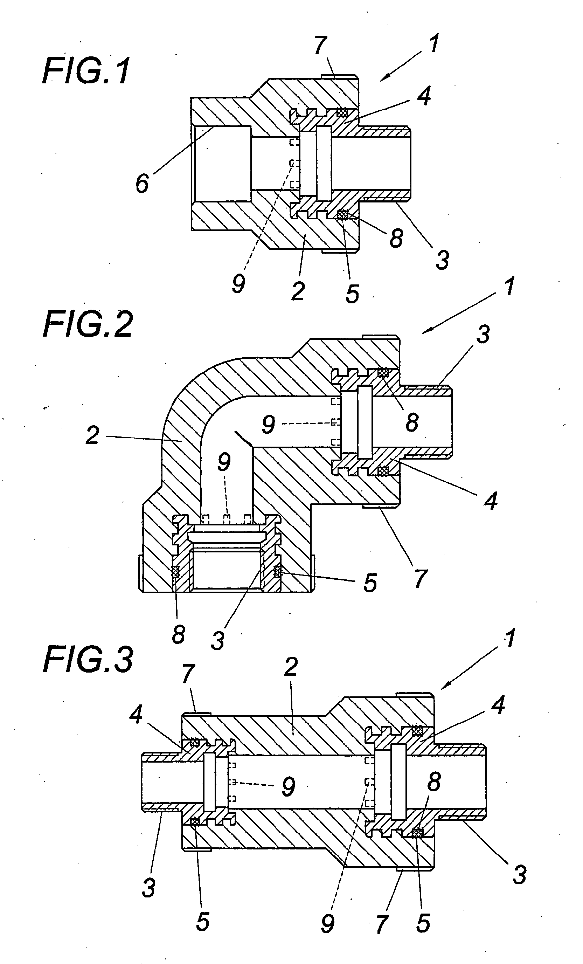

In der Zeichnung ist der Erfindungsgegenstand beispielsweise dargestellt, und zwar zeigen
Fig. 1 ein Anschlussstück im Längsschnitt,
Fig. 2 ein Verbindungsstück im Längsschnitt, und
Fig. 3 ein Verbindungsstück mit Querschnittsreduzierung im Längsschnitt.

Die dargestellten Armaturen, insbesondere Verbindungs- bzw. Anschlussstücke 1, umfassen je wenigstens einen mit einem Kunststoffmantel 2 umspritzten, einen Anschluss 3 mit einem Gewinde ausbildenden Einlegeteil 4. Kunststoffmantel 2 und Einlegeteil 4 bestehen aus miteinander unverklebbaren oder unverschweißbaren Kunststoffen. Zur Abdichtung des Überganges zwischen den beiden Kunststoffen ist zwischen Einlegeteil 4 und Kunststoffmantel 2 je wenigstens ein Dichtelement 5, im dargestellten Ausführungsbeispiel ein Dichtring, angeordnet ist, der sowohl mit dem Einlegeteil 4 als auch mit dem Kunststoffmantel 2 stoffschlüssig verbunden ist.

Das Dichtelement 5 ist dabei in eine Außenringrille 8 des Einlegeteils eingesetzt und mit diesem stoffschlüssig verbunden und besteht aus einem thermoplastischen Elastomer. Zudem ist das Einlegeteil 4 im Kunststoffmantel 2 mittels einer Verzahnung 9 gegen eine Relativverdrehung gesichert. Mit der Erfindung soll eine Dichtung geschaffen werden, die sowohl zum Einlegeteil 4, als auch zum umhüllenden Polymer, dem Kunststoffmantel 2, eine chemische Bindung eingeht und somit für eine stoffschlüssige Erfindung sorgt.

Im Folgenden sind beispielsweise einige Werkstoffe angegeben:
Einlegeteil 4:
   - Polyamid (ggf. unter Zusatz von Glasfasern, Glaskugeln und/oder Mineralfasern)
   - Polyphtalamide (ggf. unter Zusatz von Glasfasern, Glaskugeln und/oder Mineralfasern)
   - POM (ggf. unter Zusatz von Glasfasern, Glaskugeln und/oder Mineralfasern)
   - ABS
Dichtelement 5: TPE (thermoplastisches Elastomer)
   - TPE- Styrol: Styrol Blockcopolymere
   - TPE-Olefin: Thermoplastische Polyolefine mit unvernetzter Elastomerphase
   - TPE-V: thermoplastische Vulkanisate, Elastomeranteil chemisch vernetzt
   - TPE-Amid: Polyether Block Amide
   - TPE-Urethan: Thermoplastische Polyurethan Elastomere
   - TPE-Ester: Thermoplastische Copolyesther Elastomere
Kunststoffmantel 2,
   - Polyolefine (PP, PE, PB, PE-RT, PEX,...)

### 1. Beispiel:

Einlegeteil 4 und Kunststoffmantel 2 werden auf einer Spritzgussmaschine gefertigt. Beide Materialien treffen im schmelzeflüssigen Zustand aufeinander. Die vorliegenden Temperaturen begünstigen die chemische Anbindung des TPE-S an das mit 50% glasfaserverstärkte Polyphtalamid (PPA). Als besonders geeignet haben sich Polyphtalamide mit einer Dichte von 1,65 g/cm³ und einem E-Modul von ca. 18.000 MPa erwiesen. Um die charakteristischen mechanischen Eigenschaften des PPA nicht durch den Kontakt mit dem Leitungsmedium zu verlieren, empfiehlt es sich, Typen mit geringer Feuchtigkeitsaufnahme von max. 1,3% einzusetzen. Die Spritzgussform kann bei der Verarbeitung von PPA entsprechend temperiert werden (beispielsweise 140-160°C). Die Massetemperatur des PPA sollte bei der Verarbeitung über 330°C liegen. Für die Dichtung empfiehlt sich eine speziell modifizierte TPE Type, die eine Shore A Härte von im Bereich zwischen 60 und 80 aufweist.

Ferner soll das Dichtungsmaterial "kalteinlegertauglich" sein. Unter "kalteinlegertauglich" versteht man, dass das Insert mit der zuvor angespritzten Dichtung in einem weiteren Verarbeitungsschritt mit einem Polyolefin (z.B. PP-H, PP-R, PP-B) umspritzt wird, die TPE Dichtung wieder anschmilzt und mit dem schmelzeflüssigen Polyolefin eine Bindung eingeht. Die Temperatur des Polyolefins sollte zwischen 220-280°C liegen.

### 2. Beispiel:

Einlegeteil 4, Dichtelement 5 und Kunststoffmantel 2 werden auf einer Spritzgussmaschine verarbeitet. Die eingesetzten Materialen treffen im Formnest im schmelzeflüssigen Zustand aufeinander. Die vorliegenden Temperaturen begünstigen die chemische Anbindung des TPE-S (speziell modifiziert für PPA) an das mit 50% glasfaserverstärkte Polyphtalamid/Polyamid/PP. Die umhüllende Polyolefin Komponente wird als letzte angespritzt. Durch den wirksamen Nachdruck aller drei Zylinder der Spritzgussmaschinen können die unterschiedlichen Schwindungsverhalten der Materialien ausgeglichen werden und so in Summe ein tauglicher Fitting produziert werden.

### 3. Beispiel:

Das Einlegeteil (4) aus füllstoffmodifiziertem Polyolefin wird auf einer konventionellen Spitzgussmaschine verarbeitet. Die Verarbeitungstemperaturen liegen in etwa bei 220°-240°C. Je nach Füllstoffgehalt müssen höhere Temperaturen gewählt werden, um die Fließfähigkeit des Materials zu gewährleisten. Das hergestellte Einlegeteil (4)wird in einem weiteren Schritt mit einem TPE-S umspritzt. Um die chemische Anbindung der TPE-S Dichtung zu gewährleisten, muss das Insert für ca. 1-2 Stunden bei 90°C vorgewärmt werden. Hinsichtlich der Verarbeitung des TPE-S ist eine Vortrocknung von 2-4 Std. bei 60-80°C sinnvoll. Um eine gute Haftung zu erzielen, ist eine Massetemperatur von mind. 240°C bis max. 290°C empfehlenswert.

## Patentansprüche

1. Armatur, insbesondere Verbindungs- bzw. Anschlussstück (1), mit wenigstens einem mit einem Kunststoffmantel (2) umspritzten, einen Anschluss (3) ausbildenden Einlegeteil (4), wobei Kunststoffmantel (2) und Einlegeteil (4) aus miteinander unverschweißbaren Kunststoffen bestehen, **dadurch gekennzeichnet, dass** zwischen Einlegeteil (4) und Kunststoffmantel (2) wenigstens ein Dichtelement (5) aus einem thermoplastischen Elastomer, vorzugsweise ein Dichtring, angeordnet ist, der sowohl mit dem Einlegeteil (4) als auch mit dem Kunststoffmantel (2) stoffschlüssig verschmolzen ist.

2. Armatur nach Anspruch 1, **dadurch gekennzeichnet, dass** das Dichtelement (5) in wenigstens eine Außenringrille (8) des Einlegeteils eingesetzt und über die Nutflanken mit dem Einlegeteil stoffschlüssig verschmolzen ist.

3. Armatur nach Anspruch 1 oder 2, **dadurch gekennzeichnet, dass** dass das Einlegeteil (4) im Kunststoffmantel (2) mittels einer Verzahnung (9) gegen eine Relativverdrehung gesichert ist.

## Claims

1. Fitting, especially a connection or attachment piece (1), having at least one insert part (4) forming an attachment (3) and having a synthetic material casing (2) injected around it, wherein the synthetic material casing (2) and insert part (4) consist of synthetic materials which cannot be welded to one another, **characterised in that** at least one sealing element (5) made from a thermoplastic elastomer, preferably a sealing ring, is disposed between the insert part (4) and synthetic material casing (2), which sealing ring is melted in an integrally bonded manner to the insert part (4) and also to the synthetic material casing (2).

2. Fitting as claimed in claim 1, **characterised in that** the sealing element (5) is inserted into at least one outer annular groove (8) of the insert part and is melted in an integrally bonded manner to the insert part via the groove sides.

3. Fitting as claimed in claim 1 or 2, **characterised in that** the insert part (4) is secured against relative rotation in the synthetic material casing (2) by means of toothing (9).

## Revendications

1. Armature, notamment pièce de liaison ou de raccordement (1), avec au moins une partie d'introduction (4) constituant un raccordement (3), enrobée d'un manchon en matière plastique (2), le manchon en matière plastique (2) et la partie d'introduction (4) étant en matières plastiques ne pouvant pas être soudées ensemble, **caractérisée en ce qu'**entre la pièce d'introduction (4) et le manchon en matière plastique (2), est disposé au moins un élément d'étanchéité (5) en élastomère thermoplastique, de préférence une bague d'étanchéité, qui est fondu de manière cohésive, aussi bien avec la partie d'introduction (4) qu'avec le manchon en matière plastique (2).

2. Armature selon la revendication 1, **caractérisée en ce que** l'élément d'étanchéité (5) est inséré dans au moins une rainure de la bague extérieure (8) de la partie d'introduction et est fondu de manière cohésive à la partie d'introduction par le biais des flancs de rainure.

3. Armature selon la revendication 1 ou 2, **caractérisée en ce que** la partie d'introduction (4) est sécurisée contre toute rotation relative dans le manchon en matière plastique (2) au moyen d'une denture (9).
